# EUROPEAN PATENT APPLICATION

(11) **EP 1 344 846 A1**
(43) Date of publication of application: **17.09.2003**
(21) Application number: 02005617.2
(22) Date of filing: 12.03.2002
(51) Int. Cl.: C25C 3/08, C04B 35/01

(54) **Aluminium reduction cell refractory material and process for the manufacture of carboceramic material**

(71) Applicant: VAW Aluminium-Technologie GmbH, 53117 Bonn (DE)
(72) Inventor: Wilkening,Siegfried c/o VAW Aluminium-Techn.GmbH, 53117 Bonn (DE)
(74) Representative: Cohausz & Florack

(57) **Abstract**

There is a need for lining-materials of aluminium electrolysis cells which are resistant to the electrolytic bath of molten cryolite, liquid aluminium and other intermediate reactants of the electrolytic process.

It was discovered that an aluminium reduction cell refractory material comprising a bottom and side lining in the form of blocks, slaps and bricks can be used for such purpose if the bottom and side linings are made of carboceramic bonded by a tar-pitch-binder.

A process for the manufacture of such carboceramic-blocks, pastes or bricks consists of
- mixing at 150-200°C fine, calcined oxides with electrode pitch and powdery additives like silicon, nitrides, graphite or coke,
- molding or forming into reforms like saggars, brickets or extrusion billets,
- baking said preforms at temperatures of 1000-1200°C for a time sufficient to produce at least 50 % carbon oxides,
- crushing and screening said carbon oxide material into different particle fractions,
- mixing said carbon oxide particles at temperatures between 50 and 200°C with pitches and additives like silicon, nitrides, graphite or coke to form a green mix which can be used as rumming paste, and
- vibroforming said green mix to green blocks,
or baking said green mix to baked blocks and machining it into carboceramic blocks.

## Description

The invention relates to an aluminium reduction cell refractory material, a process for the manufacture of carboceramic blocks, pastes and bricks and a process for the preparation of a corrosion resistant bottom and side lining.

In the search of lining materials for aluminium electrolysis cells, which are resistant to the electrolytic bath of molten cryolite, liquid aluminium and other intermediate reactants of the electrolytic process, the inventor has found that carboceramic materials are the most promising one. The technical term "carboceramic" is used here in the sense that ceramic raw materials are bonded with carbon, i.e. the basic filler consists of refractory oxides, carbides or nitrides whilst the carbon bond results from the carbonisation of carbonaceous binders such as tars, pitches or appropriate resins. The carbon bond can be strengthened or supported by carbides or nitrides created during the inventive process of heat-treatment.

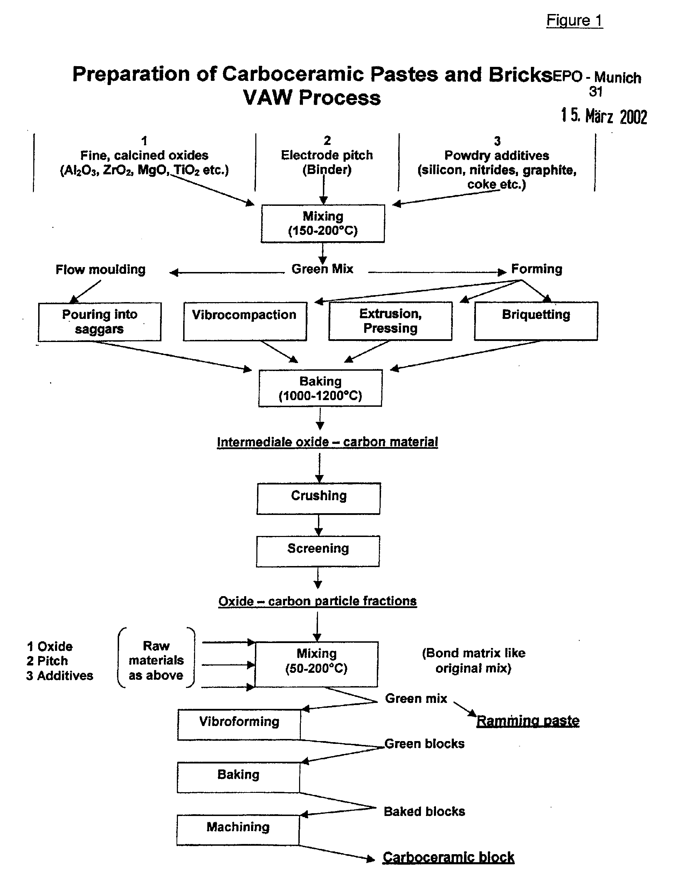

The fundamental scheme to produce the new carboceramic materials is delineated in the chart, Figure 1. It can be seen from Figure 1 that there are two stages of carboceramic materials.

In the first stage an intermediate carboceramic material is produced. It will be crushed and ground and serves mainly as a baked or fired raw material for the manufacture of carboceramic blocks, slabs, bricks or other shaped lining articles in the second stage.

The preferred refractory oxides for carboceramic lining materials in aluminium reduction cells are alumina, zirconia, titania, magnesia or any mixtures of them. Other oxidic refractory materials such as chamotte, mullite, spinels or the like may be used but are not preferred according to certain disadvantages like low density and thermal insulation. Pitch of different softening points is the preferred binder. The selected oxides are mixed with the binder pitch at elevated temperatures. The mixtures are formed to bales or poured into coking vessels. The unshaped mixes of varying consistency are baked under reducing conditions up to 1000 or even 1200°C. The baked intermediate products are crushed and screened.

The granular, intermediate materials can already be employed in the cell lining. A carbonceramic material with alumina as filler can, for example, be used to replace alumina or fireclay fines as an embedding material for cathode blocks or to enclose that part of the collector bar section which is passed through the side joint at the head end of the cathode blocks. The alumina-containing carboceramic material remains solid and stable when it is soaked with components of the cryolitic bath. It is also resistant and less pervious to liquid aluminium, i.e. layers and packings of aluminous carboceramic material represent a better barrier to the penetration of liquid aluminium than pure alumina or pure fireclay fines.

Another example of application may prove the usefulness of a granular carboceramic material with zirconia as a filler. The apparent density of these carboceramic particles is approximately 4 g/cm³ and thus appreciably heavier than liquid aluminium with a density of 2.3 g/cm³. Coarse particles of this type of carboceramic material can be poured into the erosion holes of fully graphitized cathode blocks. The particles settle on the bottom of the pot holes in the cathode blocks and retard or even stop further electrochemical erosion. Breakthrough of aluminium to the collector bar is thus hampered and potlife extended.

Shaped carboceramic products according to the manufacturing step 2 in the flow diagramme of Figure 1 are predominantly used in the side pier and side escarpment of reduction cells, preferably in combination with high-conductive graphite cathode blocks. The high thermal conductivity of graphite cathode blocks entails an increase in temperature in the side pier and a stronger cryolite bath infiltration. Under such conditions carboceramic bricks or blocks are definitely superior to plain refractory bricks. Carbon materials in the slope of the side wall lining of potshells are gradually eroded by aluminium carbide formation. If this sole carbon construction is substituted by carboceramic products, erosion is significantly reduced at the hot face.

It was an object of the present invention to produce a refractory in the form of carboceramic materials for the bottom and side lining of aluminium reduction cells. It was found that refractory oxides can be bonded with carbon in such a way that the granular or shaped products are highly resistant to the attack of cryolitic melts and liquid aluminium, and have a high electrical resistance and low thermal conductivity compared to 100 % carbon materials.

According to Fig. 1 the process for the manufacture of carboceramic blocks, pastes or bricks consists of
- mixing at 150-200°C fine, calcined oxides with electrode pitch and powdery additives like silicon, nitrides, graphite or coke,
- molding or forming into performs like saggars, brickets or extrusion billets,
- baking said preforms at temperatures of 1000-1200°C for a time sufficient to produce at least 50 % carbon oxides,
- crushing and screening said carbon oxide material into different particle fractions,
- mixing said carbon oxide particles at temperatures between 50 and 200°C with pitches and additives like silicon, nitrides, graphite or coke to form a green mix which can be used as rumming paste, and
- vibroforming said green mix to green blocks,
- or baking said green mix to baked blocks and machining it into carboceramic blocks.

According to another embodiment of the invention the process for the preparation of a corrosion resistant button and side lining of an aluminium reduction cell is characterized in that a carbon ceramic material with zirconia as a filler is crashed to coarse particles, pouring the coarse particles into pores and erosion holes of said bottom and side lining and sealing the surface of the bottom and side lining.

## Claims

1. Aluminium reduction cell refractory material comprising
a bottom and side lining in the form of blocks, slaps and bricks **characterized in that** the bottom and side linings are made of carbonceramic bonded by a tar-pitch-binder.

2. Aluminium reduction cell refractory material according to claim 1,
**characterized in**
**that** the carbonceramic consists of at least one refractory oxide reacted with a carbonaceous binder under carbonizing conditions.

3. Aluminium reduction cell refractory material according to claim 1 or 2,
**characterized in**
**that** the refractory oxides are selected from the group consisting of alumina, zirconia, titania, magnesia or mixtures.

4. Aluminium reduction cell refractory material according to claim 2 or 3,
**characterized in**
**that** the carbonaceous binder is selected from the group consisting of tars, pitches or resins with high carbonaceous residue.

5. Aluminium reduction cell refractory material according to anyone of claims 1 - 4,
**characterized in**
**that** the density of the carbonceramic is higher than the density of molten aluminium.

6. Process for the manufacture of carboceramic blocks, pastes or bricks consisting of
- mixing at 150-200°C fine, calcined oxides with electrode pitch and powdery additives like silicon, nitrides, graphite or coke,
- molding or forming into performs like saggars, brickets or extrusion billets,
- baking said preforms at temperatures of 1000-1200°C for a time sufficient to produce at least 50 % carbon oxides,
- crushing and screening said carbon oxide material into different particle fractions,
- mixing said carbon oxide particles at temperatures between 50 and 200°C with pitches and additives like silicon, nitrides, graphite or coke to form a green mix which can be used as rumming paste, and
- vibroforming said green mix to green blocks,
- or baking said green mix to baked blocks and machining it into carboceramic blocks.

7. Process for the preparation of a corrosion resistant button and side lining of an aluminium reduction cell,
**characterized in**
**that** a carbon ceramic material with zirconia as a filler is crashed to coarse particles, pouring the coarse particles into pores and erosion holes of said bottom and side lining and sealing the surface of the bottom and side lining.
